# EUROPÄISCHE PATENTSCHRIFT

(11) **EP 1 090 152 B1**
(45) Veröffentlichungstag und Bekanntmachung des Hinweises auf die Patenterteilung: **11.02.2004**
(21) Anmeldenummer: 00918558.8
(22) Anmeldetag: 14.04.2000
(51) Int. Cl.: C22B 7/04, C22B 7/02, C21C 5/56

(54) **VERFAHREN ZUM AUFARBEITEN VON STAHLSCHLACKEN**
METHOD FOR PROCESSING STEEL SLAGS
PROCEDE POUR TRAITER DES SCORIES D'ACIERS

(30) Priorität: 22.04.1999 AT 71999
(43) Veröffentlichungstag der Anmeldung: 11.04.2001
(73) Patentinhaber: Holcim Ltd., 8645 Jona (CH)
(72) Erfinder: EDLINGER, Alfred, CH-5400 Baden (CH)
(74) Vertreter: Haffner, Thomas M., Dr.
(86) Internationale Anmeldenummer: PCT/AT2000/000088
(87) Internationale Veröffentlichungsnummer: WO 2000/065108

(56) Entgegenhaltungen:
- WO-A-97/46717
- US-A- 4 001 012
- US-A- 4 588 436
- DATABASE WPI Week 200003 Derwent Publications Ltd., London, GB; AN 2000-036664 XP002143440 "Blend for preparing high carbon ferrochrome" & RU 2 115 627 A (CHELY ELECTROMETAL COMBINE STOCK CO), 20. Juli 1998 (1998-07-20)
- PATENT ABSTRACTS OF JAPAN vol. 011, no. 163 (C-424), 26. Mai 1987 (1987-05-26) & JP 61 291911 A (SUMITOMO METAL IND LTD), 22. Dezember 1986 (1986-12-22)

## Beschreibung

Die Erfindung bezieht sich auf ein Verfahren zum Aufarbeiten von Stahlschlacken und gegebenenfalls Eisenträgern, wie z.B. Elektroofen-, Konverterschlacken, Stäuben aus der Stahlherstellung, Walzwerkzunder oder sekundärmetallurgischen Rückständen.

Ein Verfahren der eingangs genannten Art ist beispielsweise in der WO 99/14381 beschrieben. Bei diesem bekannten Verfahren wurden Stahlschlacken gemeinsam mit Eisenträgern und insbesondere gemeinsam mit Feinerz über einem Eisenbad reduziert, um auf diese Weise umweltverträgliche Schlacken auszubilden. Zu diesem Zweck wurde unter anderem auch SiO₂ zur Einstellung einer vorteilhaften Schlackenbasizität oder Al₂O₃ zugesetzt, wobei der Zusatz von Eisenträgern, wie beispielsweise von Feinerzen in erster Linie dazu diente, derartige schwer aufzuarbeitende und mit konventionellen Verfahren schwer zu reduzierende Ausgangsstoffe sinnvoll einzusetzen, um die Wirtschaftlichkeit des Verfahrens zu verbessern. Bedingt durch die relativ geringe Wärmeleitfähigkeit von Schlacken und eine gegenüber Eisen etwa 1,5 bis 2-fache Wärmekapazität ist für die Wirtschaftlichkeit derartiger Verfahren die erzielbare Wärmeübertragung bzw. der Nachverbrennungsgrad von wesentlicher Bedeutung. In jedem Fall ist aber für eine derartige Aufarbeitung von Stahlschlacken zur Erzielung umweltverträglicher Schlacken mit einem relativ hohen Energieaufwand zu rechnen.

Die Erfindung zielt nun darauf ab, ein Verfahren der eingangs genannten Art dahingehend zu verbessern, daß gleichzeitig mit der Aufarbeitung von Schlacken wertvolle Rohstoffe gewonnen werden, welche die Wirtschaftlichkeit des Verfahrens trotz erhöhten Energieaufwandes gewährleisten. Zur Lösung dieser Aufgabe besteht das erfindungsgemäße Verfahren im wesentlichen darin, daß die flüssigen Stahlschlacken bzw. Eisenträger mit Chromerzen oder chrom- und/oder nickelhältigen Stäuben zur Einstellung einer Schlackenbasizität von 1,2 bis 1,6 versetzt werden, wobei die Badtemperatur auf über 1600° C, insbesondere zwischen 1650° C und 1800° C, gehalten wird und ein kohlenstoffhältiges Fe-Bad vorgelegt oder ausgebildet wird und daß die Schlacke und die gebildete Ferrochromlegierung gesondert abgestochen werden. Dadurch, daß Chromerze oder chrom- und/oder nickelhältige Stäube eingesetzt werden, besteht zwar prinzipiell die Gefahr eines überhöhten Chromoxidgehaltes in der Schlacke, welcher die Umweltverträglichkeit der auf diese Weise aufgearbeiteten Stahlschlacken wiederum ernsthaft in Frage stellen könnte. Dadurch, daß aber nun bei Badtemperaturen von über 1600° C gearbeitet wird, gelingt es überraschenderweise Schlackenendchromgehalte von weit unter 500 ppm zu erreichen und gleichzeitig Chrom aus derartigen Chromerzen nahezu quantitativ in das zur Reduktion eingesetzte Eisenbad überzuführen. Die Aktivität des Chroms im Eisenbad wird durch Chromcarbidbildung entscheidend herabgesetzt, wofür entsprechend kohlenstoffhaltiges Eisenbad vorgelegt oder ausgebildet sein muß. Der Kohlenstoffgehalt des Eisenbades soll hiebei in aller Regel über 3 Gew.% C gehalten werden, um sicherzustellen, daß die gewünschte Chromcarbidbildung erfolgt, sodaß keine Rückverschlackung des reduzierten Chromoxides stattfindet. Endchromkonzentrationen eines derartig vorgelegten kohlenstoffhältigen Eisenbades können bis zu 60 Gew.% Chrom betragen, sodaß ein hochwertiger Metallregulus in Form von sogenannten Ferro-Chrom-Carbure, in welchem der Kohlenstoffanteil bis zu 9 Gew.% betragen kann. Trotz des geforderten hohen Temperaturniveaus ist die Wirtschaftlichkeit einer derartigen Verfahrensweise aufgrund der Hochwertigkeit des Metallregulus gewährleistet, wobei die auf diese Weise gebildete Vorlegierung, welche im Edelstahlwerk eingesetzt werden kann, die Gesamtenergiekosten und Produktionskosten der entsprechend umweltverträglicher gewordenen Schlacken deckt.

Für das erfindungsgemäße Verfahren wesentlich ist das hohe Temperaturniveau von über 1600° C, welches nur durch entsprechende Nachverbrennung gewährleistet werden kann. Weiters muß ein entsprechend rascher Stoffaustausch gewährleistet werden. Diese Bedingungen können in vorteilhafter Weise dadurch eingehalten werden, daß die Chromerze oder chrom- und/oder nickelhältigen Stäube über eine Heißwindlanze mit Korngrößen von unter 4 mm, vorzugsweise 0,5 bis 2 mm, auf das Bad aufgeblasen werden. Durch das Einblasen der Chromerze mit derartiger Körnung mit einem Strahl entsprechender Geschwindigkeit können hohe Turbulenzen ausgebildet werden, wodurch das Bad einer intensiven Rührwirkung ausgesetzt wird. Die aufgrund der Körnung gegebene große relative Oberfläche und die großen Scherkräfte zwischen den einzelnen Phasen und im besonderen zwischen der Gasphase, den Chromerzen, der Schlackenschmelze und der Metallschmelze führen zu entsprechend hohen Energieund Stoffaustauschraten. Das geforderte Temperaturniveau kann in einfacher Weise dadurch sichergestellt werden, daß Heißwind mit Temperaturen zwischen 1200° und 1600° C eingesetzt wird.

Um eine entsprechende Nachverbrennung sicherzustellen, ist mit Vorteil der Heißwind auf einen Sauerstoffgehalt von 25 bis 40 Gew.% mit Sauerstoff angereichert, wobei ein frühzeitiges Ansteifen der Schlacke durch den fortschreitenden Reduktionsvorgang in vorteilhafter Weise durch Vermischen der Stahlschlacken mit dem Chromerz in einem eigenen Mischgefäß erfolgen kann. In einem derartigen Mischgefäß kann die entsprechende Basizität und die Mischschlackentemperatur eingestellt werden, wobei die Schlackenmischung beispielsweise mit Temperaturen von etwa 1750° C abgestochen und dem nachfolgenden Reduktionsaggregat zugeführt werden kann. Bei derartig hohen Schlackeneingangstemperaturen im Reduktionskonverter kann sogar auf Sauerstoffanreicherung des Heißluftstrahles verzichtet werden.

Mit Vorteil wird hier so vorgegangen, daß die flüssige Stahlschlacke und die Chromerze in einer Schlackenpfanne gemischt und insbesondere unter Verwendung von Graphitelektroden elektrisch beheizt werden und mit Temperaturen von über 1700°C, vorzugsweise über 1750°C, auf das Eisenbad aufgebracht werden, worauf das Eisenbad aufgekohlt und Heißwind aufgeblasen wird. Das Eisenbad soll hier zur Verringerung der Anfangsreduktionsgeschwindigkeit niedriggekohlt bzw. mit Heißwind gefrischt vorliegen, wobei gleichzeitig hohe Badtemperaturen sichergestellt werden. Ausgehend von C-Gehalten von beispielsweise 0,8 - 1,5 Gew.% C im Fe-Bad wird der für die quantitative Abtrennung von Cr erforderliche C-Gehalt erst in der Folge durch Aufkohlung des Bades eingestellt.

Zur Erzielung besonders hoher Umweltverträglichkeit der behandelten Stahlschlacke wird mit Vorteil die Basizität auf 1,4 bis 1,55 eingestellt.

Eine entsprechend sichere Durchmischung des Bades gelingt in besonders einfacher Weise dadurch, daß der Heißwind mit den Chromerzen bzw. chrom- und/oder nickelhältigen Stäuben mit Strahlgeschwindigkeiten von über 500 m/sec, insbesondere 700 m/sec, auf das Bad gerichtet wird.

Als Stahlschlacken kommen in Rahmen des erfindungsgemäßen Verfahrens bevorzugt Edelstahlschlacken zum Einsatz, wobei jedoch auch LD-, OBM-, Elekroofenschlacken sowie sekundärmetallurgische Rückstände als Einsatzmaterial in Frage kommen. Chromerze können wenigstens teilweise durch Hochchrom- und nickelbelastete Stäube ersetzt werden, wobei in jedem Fall der Phosphoreintrag minimiert werden muß.

Insgesamt hat das erfindungsgemäße Verfahren, bei welchem Kohlenstoffgehalte bis zu 9 Gew.% im Bad erzielt werden können, den Vorteil, daß eine Rückverschlackung von Chrom in die Schlacke weitestgehend ausgeschlossen werden kann, wobei bei Temperaturen von 1650° C Restchromoxidgehalte in der Schlacke von unter 360 ppm beobachtet wurden.

Die Erfindung wird nachfolgend anhand eines Ausführungsbeispieles näher erläutert. Stahlschlacke der nachfolgenden Zusammensetzung

| Stahlschlacke | |
|---|---|
| Komponente | Anteil (%) |
| CaO | 52 |
| SiO₂ | 31 |
| Al₂O₃ | 3 |
| FeO | 4,5 |
| Cr₂O₃ | 9 |
| CaO/SiO₂ = 1,67 | |

wurde mit Chromerz der nachfolgenden Zusammensetzung

| Chromerz (Transwaal) | |
|---|---|
| Komponente | Anteil (%) |
| Cr₂O₃ | 44,4 |
| FeO | 25,05 |
| SiO₂ | 8,2 |
| MgO | 5,3 |
| Al₂O₃ | 16,62 |

solange versetzt, bis eine Zielbasizität von ungefähr 1,5 erreicht wurde. Chromerze sind in der Regel sauer, sodaß durch den Zusatz von Chromerzen die entsprechende Basizität eingestellt werden kann.

Das Chromerz wurde über eine Heißgaslanze auf die Schmelze aufgeblasen, wobei als geschwindigkeitsbestimmender Schritt die Erzförderrate ermittelt wurde. Die Reduktion selbst verlief innerhalb von Sekunden und war lediglich abhängig von der Auflösekinetik und damit von der Körnung der Chromerze. Es wurde Chromerz mit einer Körnung von 0,5 bis 2 mm eingesetzt, wobei zur Erzielung der Zielbasizität von etwa 1,5 (CaO/SiO₂), 1 Gew.Teil Stahlschlacke mit 0,442 Gew.Teilen Chromerz beschossen wurde. Die erzielte Mischschlacke setzte sich aus 69,35 Gew.% Stahlschlacke und 30,65 Gew.% Chromerz zusammen und hatte die nachfolgende Zusammensetzung

| Mischschlacke | |
|---|---|
| Komponente | Anteil (%) |
| CaO | 36 |
| SiO₂ | 24 |
| Al₂O₃ | 7,2 |
| FeO | 10,8 |
| Cr₂O₃ | 19,85 |
| MgO | 1,63 |
| CaO/SiO2 = 1,5 | |

Diese Mischschlacke wurde fortlaufend auf ein kohlenstoffhaltiges Eisenbad gebracht und reduziert, worauf in der Folge eine Schlacke der nachfolgenden Zusammensetzung

| Komponente | Anteil (%) |
|---|---|
| CaO | 52,3 |
| SiO₂ | 34,8 |
| Al₂O₃ | 10,5 |
| MgO | 2,4 |

erzielt wurde. Aus 1 t Mischschlacke entstanden 0,688 t einer derartigen Zielschlacke. Gleichzeitig wurde ein hochwertiger Metallregulus mit der nachfolgenden Zusammensetzung

| | |
|---|---|
| Fe | 35 % |
| Cr | 55 % |
| C | 8 % |

gebildet. Derartiges Ferro-Chrom-Carbure konnte in der Folge direkt als Vorlegierung im Edelstahlwerk eingesetzt werden.

Zur Aufrechterhaltung der erforderlichen Behandlungstemperatur der Schlacke mit über 1600° C hatte sich als vorteilhaft herausgestellt, zum Heißwindstrahl Kohlestaub und Kohle zuzugeben. Die Energiebilanz kann auf diese Weise durch sehr billige thermische Kohle, aber auch durch Zugabe von Schweröl oder Erdgas ökonomisch verbessert werden.

## Patentansprüche

1. Verfahren zum Aufarbeiten von Stahlschlacken und gegebenenfalls Eisenträgern, wie z.B. Elektroofen-, Konverterschlacken, Stäuben aus der Stahlherstellung, Walzwerkzunder oder sekundärmetallurgischen Rückständen, **dadurch gekennzeichnet, daß** die flüssigen Stahlschlacken bzw. Eisenträger mit Chromerzen oder chrom- und/oder nickelhältigen Stäuben zur Einstellung einer Schlackenbasizität von 1,2 bis 1,6 versetzt werden, wobei die Badtemperatur auf über 1600° C, insbesondere zwischen 1650° C und 1800° C, gehalten wird und ein kohlenstoffhältiges Fe-Bad vorgelegt oder ausgebildet wird und daß die Schlacke und die gebildete Ferrochromlegierung gesondert abgestochen werden.

2. Verfahren nach Anspruch 1, **dadurch gekennzeichnet, daß** die Chromerze oder chrom- und/oder nickelhältigen Stäube über eine Heißwindlanze mit Korngrößen von unter 4 mm, vorzugsweise 0,5 bis 2 mm, auf das Bad aufgeblasen werden.

3. Verfahren nach Anspruch 2, **dadurch gekennzeichnet, daß** Heißwind mit Temperaturen zwischen 1200° und 1600° C eingesetzt wird.

4. Verfahren nach Anspruch 1, 2 oder 3, **dadurch gekennzeichnet, daß** der Heißwind auf einen Sauerstoffgehalt von 25 bis 40 Gew.% mit Sauerstoff angereichert wird.

5. Verfahren nach einem der Ansprüche 1 bis 4, **dadurch gekennzeichnet, daß** die Basizität auf 1,4 bis 1,55 eingestellt wird.

6. Verfahren nach einem der Ansprüche 1 bis 5, **dadurch gekennzeichnet, daß** der Heißwind mit den Chromerzen bzw. chromund/oder nickelhältigen Stäuben mit Strahlgeschwindigkeiten von über 500 m/sec, insbesondere 700 m/sec, auf das Bad gerichtet wird.

7. Verfahren nach einem der Ansprüche 1 bis 6, **dadurch gekennzeichnet, daß** der C-Gehalt des Fe-Bades auf über 3 Gew.% C gehalten wird.

8. Verfahren nach einem der Ansprüche 1 bis 7, **dadurch gekennzeichnet, daß** die flüssige Stahlschlacke und die Chromerze in einer Schlackenpfanne gemischt und insbesondere unter Verwendung von Graphitelektroden elektrisch beheizt werden und mit Temperaturen von über 1700°C, vorzugsweise über 1750°C, auf das Eisenbad aufgebracht werden, worauf das Eisenbad aufgekohlt und Heißwind aufgeblasen wird.

## Claims

1. A method for processing steel slags and optionally iron carriers such as, e.g., electric furnace slags, converter slags, dusts derived from steel production, mill scale or secondary metallurgical residues, **characterized in that** the molten steel slags and iron carriers, respectively, are supplemented with chromium ores or chromium-containing and/or nickel-containing dusts in order to adjust a slag basicity of 1.2 to 1.6, whereby the bath temperature is maintained at above 1600°C, in particular between 1650°C and 1800°C, and a carbon-containing iron bath is provided or formed, and that the slag and the ferrochromium alloy formed are tapped separately.

2. A method according to claim 1, **characterized in that** the chromium ores or chromium-containing and/or nickel-containing dusts are top-blown onto the bath via a hot blast lance at particle sizes of below 4 mm, preferably 0.5 to 2 mm.

3. A method according to claim 2, **characterized in that** hot blast at temperatures of between 1200° and 1600°C is used.

4. A method according to claim 1, 2 or 3, **characterized in that** the hot blast is enriched with oxygen to an oxygen content of 25 to 40 wt.-%.

5. A method according to any one of claims 1 to 4, **characterized in that** the basicity is adjusted to 1.4 to 1.55.

6. A method according to any one of claims 1 to 5, **characterized in that** the hot blast with the chromium ores or chromium-containing and/or nickel-containing dusts is directed onto the bath at jet speeds of more than 500 m/s and, in particular, 700 m/s.

7. A method according to any one of claims 1 to 6, **characterized in that** the carbon content of the iron bath is kept at above 3 wt.-% C.

8. A method according to any one of claims 1 to 7, **characterized in that** the molten steel slag and the chromium ores are mixed in a slag ladle and are electrically heated using, in particular, graphite electrodes and applied onto the iron bath at temperatures of above 1700°C, preferably above 1750°C, whereupon the iron bath is carburized and hot blast is top-blown.

## Revendications

1. Procédé de traitement de laitiers d'aciérie et éventuellement de porteurs de fer, comme par exemple des laitiers de fours électriques, de convertisseurs, des poussières issues de la fabrication de l'acier, des calamines de laminoir ou des résidus métallurgiques secondaires, **caractérisé en ce que** les laitiers d'aciérie liquides ou les porteurs de fer sont mélangés avec des chromites ou des poussières contenant du chrome et/ou du nickel pour régler une basicité de laitier comprise entre 1,2 et 1,6, où la température de bain est maintenue à plus de 1 600 °C, en particulier entre 1 650 °C et 1 800 °C, et un bain de Fe contenant du carbone est présent ou élaboré, et **en ce que** le laitier et l'alliage de ferrochrome formé sont soutirés séparément.

2. Procédé selon la revendication 1, **caractérisé en ce que** les chromites ou les poussières contenant du chrome et/ou du nickel sont insufflés sur le bain via une lance à vent chaud avec des tailles de grains inférieures à 4 mm, de préférence comprises entre 0,5 et 2 mm.

3. Procédé selon la revendication 2, **caractérisé en ce que** le vent chaud est utilisé à des températures comprises entre 1 200 °C et 1 600 °C.

4. Procédé selon la revendication 1, 2 ou 3, **caractérisé en ce que** le vent chaud est enrichi avec de l'oxygène pour donner une teneur en oxygène comprise entre 25 et 40 % en poids.

5. Procédé selon l'une des revendications 1 à 4, **caractérisé en ce que** la basicité est réglée entre 1,4 et 1,55.

6. Procédé selon l'une des revendications 1 à 5, **caractérisé en ce que** le vent chaud est dirigé sur le bain avec les chromites ou les poussières contenant du chrome et/ou du nickel selon des vitesses de jet supérieures à 500 m/sec, en particulier supérieures à 700 m/sec.

7. Procédé selon l'une des revendications 1 à 6, **caractérisé en ce que** la teneur en C du bain de Fe est maintenue à plus de 3 % en poids de C.

8. Procédé selon l'une des revendications 1 à 7, **caractérisé en ce que** le laitier d'aciérie liquide et les chromites sont mélangés dans une cuve à laitier, et chauffés par voie électrique en particulier en utilisant des électrodes de graphite, puis amenées sur le bain de fer à des températures supérieures à 1 700 °C, de préférence supérieures à 1 750 °C, suite à quoi le bain de fer est carburé et le vent chaud insufflé.
